# EUROPEAN PATENT SPECIFICATION

(11) **EP 2 544 068 B1**
(45) Date of publication and mention of the grant of the patent: **29.08.2018**
(21) Application number: 11005540.7
(22) Date of filing: 07.07.2011
(51) Int. Cl.: G05D 23/275

(54) **Controlled valve means for a heat exchanger**
Gesteuerte Ventileinrichtung für Wärmetauscher
Vanne commandée pour échangeur thermique

(43) Date of publication of application: 09.01.2013
(73) Proprietor: Danfoss A/S, 6430 Nordborg (DK)
(72) Inventor: Gregersen, Niels, 8464 Galten (DK)
(74) Representative: Keil & Schaafhausen Patent- und Rechtsanwälte PartGmbB

(56) References cited:
- EP-A1- 0 923 013
- WO-A1-00/52373
- DE-A1- 3 148 268
- DE-B3-102005 038 068
- US-A1- 2004 182 944

## Description

The invention relates to a controlled valve means for a heat exchanger, in particular for a radiator, said valve means comprising a valve element controlling a flow of a heat carrying fluid through said heat exchanger and being actuated by an actuator, said actuator being controlled by control means.
Such a controlled valve means is known from DE 10 2005 038 068 B3.

In the following the invention is described in connection with a heating system, in which the heat carrying fluid has an elevated temperature which is used to heat a room or a plurality of rooms. To this end the heat carrying fluid, for example hot water, is passed through the radiator. The control means control the actuator so that a set-point temperature is reached in the room. In this case the valve means is thermostatically controlled. The invention is also applicable to a cooling system in which the heat carrying fluid has a temperature lower than the temperature in the room. In this case the heat carrying fluid flows through another kind of heat exchanger, e.g. a cooling cealing. The heat carrying fluid is heated and transports heat away from the room.

In many central heating systems the temperature of the heat carrying fluid is lowered over night in order to save energy, a so called "central night setback". The same is true for central cooling systems in which the temperature of the heat carrying fluid is not lowered during a certain period during the night. The setback can also be imagined during other periods of the day, e.g. when it is expected that nobody is at home.

However, when a thermostatically controlled valve is used it is counteracting the central night setback by opening the valve. The reason is that the thermostatic controlled valve means will attempt to maintain the room temperature by opening the valve, when the inlet temperature, i.e. the temperature of the heat carrying fluid, drops. A fully open valve means allows a maximum flow of heat carrying fluid. This flow requires pump work for circulation wasting energy. Furthermore, in some cases a fully open valve is the reason for valve noises at night.

The task underlying the invention is to save energy in the central heating or cooling system.

This task is solved with a controlled valve means of the kind mentioned above in that said control means comprise learning means comprising a clock and detecting means for an observation parameter, said observation parameter being influenced by a temperature of said heat carrying fluid, wherein said learning means determine a time of a periodical central setback by detecting a systematic reduction of the inlet temperature of the heat carrying fluid, said learning means overriding the regulation in the valve means, during said determined time of periodical central setback.

The learning means can be realized by a function in the software of the valve means. The learning means can detect a systematic and programmed reduction of the inlet temperature of the heat carrying fluid. When it is clear that the temperature change of the heat carrying fluid is not caused by a change of the outside or ambient temperature but by a programmed central night setback, the thermostatic regulation of the valve means is paused so that the valve element is not driven in an unwanted open state. Thus large flows with unheated water at night can be avoided. The pump work for circulation will be substantially reduced. Furthermore, a better regulation is obtained, as the thermostatic valve means is more closed, when the inlet temperature is increased again. Since the learning means allow the determination of the central night or other setback in a stand-alone operation there is no need for any wiring or a wireless communication between the valve means and a central processor of the heating system. The learning means require some time for the determination of the time at which the central night setback occurs. However, most heating systems are operated over rather long times so that the time for learning the central night setback time is negligible.

Said learning means comprise a clock and detecting means for an observation parameter, said observation parameter being influenced by a temperature of said heat carrying fluid. With the help of the clock the time can be determined in which the observation parameter indicates a drop or increase of the temperature of the heat carrying fluid. When this time is the same for a couple of days (or other periods) it is clear that this temperature drop or increase is not accidental but caused by a program of the central heating system.

In a preferred embodiment said detecting means comprise a temperature sensor arranged close to a housing part through which said heat carrying fluid flows. In this case the temperature sensor can determine directly the temperature of the heat carrying fluid. This temperature will change over a period of 24 hours or any other period. However, with a central night setback the change will always occur at the same time.

Additionally or alternatively said detecting means registers an error for the temperature regulation in said valve means. The error is the difference between the set point temperature and the measured room temperature. When the temperature of the heat carrying fluid is lowered at the central night setback it is no longer able to heat the room. Therefore, the error increases dramatically. This increase can be used as indication for the central night setback.

Preferably said learning means differentiate said observation parameter over the time forming a differentiated function. The differentiated function shows a gradient or rate of change of the temperature caused by the central night setback. At the beginning of the central night setback the temperature of the heat carrying fluid is dropped rather fast. The same is true for the end of the central night setback. At this point the temperature of the heat carrying fluid is increased rather fast. The faster the drop or increase of the temperature is the larger is the function value of the differentiated function at this time. This makes it easy to discover start and end of the central night setback.

Preferably said differentiated function is summed by a predetermined number of periods to form a summation function, and said summation function being compared with a threshold value. This means that the learning means takes the function values of the differentiated function at the same time for each period and sums at this time the function values of all periods. Since the central night setback is always at the same time, the summation function at this time has the largest value. When a temperature drop or a temperature increase occurs only during one of said periods the function value of the summation function will at this time be larger than the function values at other times. However, it will not exceed the threshold value. Only times at which the function value of the summation function exceeds the threshold value are considered as start point or end point of the central night setback. Since usually a temperature drop and a temperature increase have different signs of the function values of the differentiated function it is possible to use the absolute values of the summation function when it is compared with the threshold value.

Preferably said learning means saves said learning time only if two consecutive changes of the observation parameter in opposite directions are detected. A central night setback is defined by a temperature drop at the beginning and a temperature increase at the end. It is not possible to have two consecutive temperature drops or two consecutive temperature increases. Therefore, a central night setback must have changes of the observation parameter in opposite directions. If this is not the case, the detected times are considered as not valid.

Preferably said learning means prevents said valve element from fully opening said valve means. This means that the valve element throttles the flow of heat carrying fluid so that valve noises during the central night setback can be removed.

Preferably said learning means lock the position of the valve element during central night setback. This has the advantage that the valve element is no longer moved. When the temperature increases at the end of the central night setback the valve element is in a position in which the regulation can start much faster than from a fully open position.

Preferably said learning means additionally comprise a calander means. This calander means can be very simple. In the simplest way it is sufficient to have a counter for the dates counting from 1 to 7. This calander means enable the learning means to detect the central night setback for different week days. For example it is possible that during working days from Monday to Friday the central night setback is timed from 22:00 o'clock to 05:00 o'clock. During the weekend the central night setback can be timed from 24:00 o'clock to 06:30 o'clock. When the learning means learns the time over a couple of weeks it is able to take into account the different times for the central night setback during the week and during the weekend.

A preferred example of the invention will now be described in more detail with reference to the drawing, wherein:
- Fig. 1: shows a schematic illustration of a thermostatically controlled valve arrangement,
- Fig. 2: shows a block diagram illustrating the invention and
- Fig. 3: shows some functions mentioned in Fig. 2.

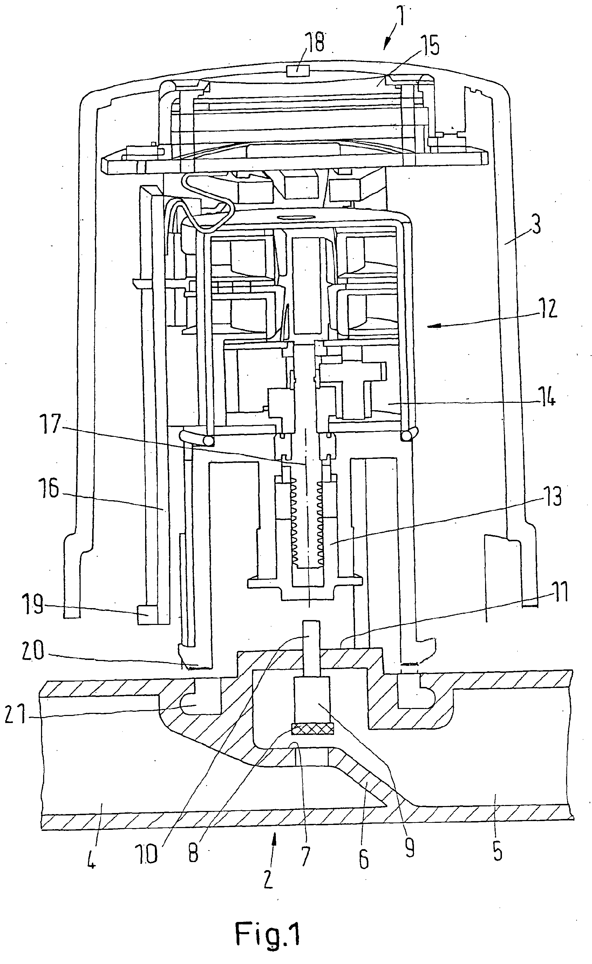

Fig. 1 shows a valve arrangement 1 having a schematically shown valve 2 and a thermostat head 3.

The valve 2 comprises an inlet 4 and an outlet 5 separated by a wall 6 in which a valve seat 7 is arranged. A valve element 8 cooperates with the valve seat 7. When the valve element 8 rests against the valve seat 7, the valve 2 is closed. When the valve element 8 (as shown) has a certain distance from the valve seat 7, the valve is open and allows a flow of heating or cooling fluid from the inlet 4 to the outlet 5.

The valve element 8 is connected to a valve spindle 9 which in turn acts together with a push rod 10 which penetrates a housing 11. Sealing means are provided but not shown. Furthermore, the valve element 8 can be preloaded by a spring (not shown) in an opening direction, i.e. in a direction away from the valve seat 7.

In Fig. 1 the thermostat head 3 is shown separated from the housing 11. The thermostat head 3 comprises an actuator 12 in form of a stepping motor or any other suitable motor or driving means which is connected to a driving spindle 13 via a gear 14. The driving spindle 13 is moved in a direction towards the housing 11, when the valve 2 should be closed, and in an opposite direction when the valve 2 should be opened. The energy necessary for operating the actuator 12 can be supplied by a battery.

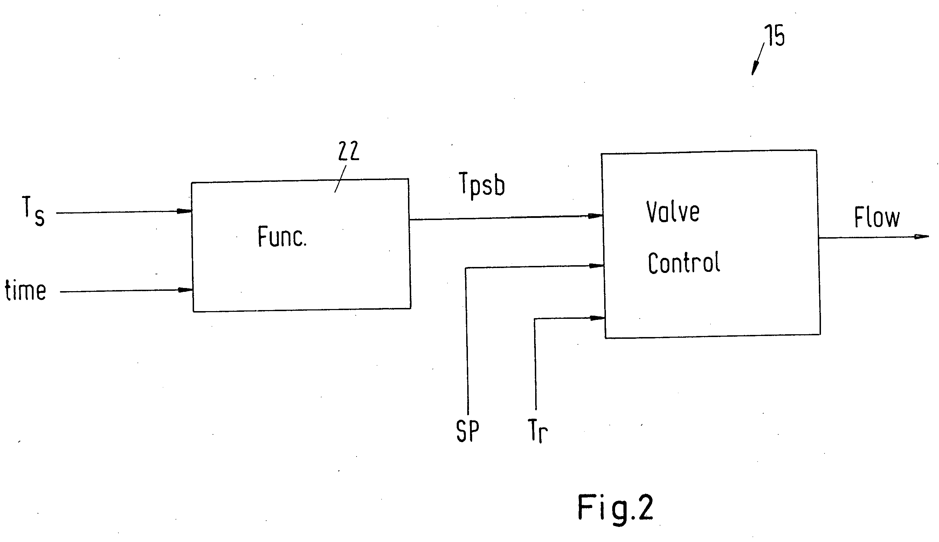

The actuator is controlled by control means 15 which are shown schematically only. A more detailed illustration is shown in Fig. 2. The control means 15 can comprise more elements than the box shown.

A support 16 in the form of a printed circuit board (PCB) is arranged parallel to an actuating axis 17 and extends in a direction towards the housing 11 of the valve 2. In this direction, the support element 16 is longer than the actuator 12.

A first temperature sensor 18 is arranged at a front face of the thermostat head 3 sensing a first temperature which is considered as ambient or room temperature. A second temperature sensor 19 is arranged at an end of the support element 16 neighbouring the housing 11. When the thermostat head 3 is mounted to the housing 11 of the valve 2, this second temperature sensor 19 is arranged in close proximity to the housing 11 and therefore is able to detect the temperature of the housing 11 or a temperature closely related to this temperature. Since the temperature of the housing 11 is closely related to the temperature of the inflowing heating or cooling fluid the second temperature sensor 19 is able to detect a temperature which is closely related to the temperature of the heating or cooling fluid.

It should be mentioned that the first temperature sensor 18 and the control means 15 are not necessarily part of the thermostat head 3. They can be positioned remote from the thermostat head 3 as long as the communication (wireless or via a communication line) is possible.

Usually such a thermostat head attempts to maintain the room temperature (measured by means of the first temperature sensor 18) at a desired or set point temperature.

When the room temperature falls below the set point temperature the thermostat head 3 opens the valve 2. The incoming heating fluid heats the room. When the room temperature reaches the set point temperature, the valve is closed.

When the valve is arranged in a cooling system the same is true in the opposite direction. When a temperature of the room is above the set point temperature the valve is open to allow a cooling fluid to pass through the valve 2. The cooling fluid removes heat from the room and carries the heat away. When the room temperature has fallen to the set point temperature, the valve 2 is closed.

Most central heating systems (and central cooling systems) have a central night setback in order to save energy, since during a period in the night no heating is required or at least a heating with a reduced temperature is sufficient.

However, a valve means 1 of the kind shown is often counteracting such central night setback by opening the valve 2 and thus allowing a maximum flow, when the temperature of the heating fluid is reduced, for example by the boiler concerned or by a weather compensation unit. As mentioned above, the reason is that the thermostatic valve means 1 will attempt to maintain the room temperature by opening the valve 2, when the inlet temperature, i.e. the temperature of the heating fluid, drops.

In order to overcome this behaviour, the control means 15 is provided with a learning means 22. This learning means 22 is shown as separate element. However, it can be a function of the control means.

The learning means comprises a clock shown as "time". Furthermore, the learning means 22 comprises detecting means for an observation parameter Ts. In the present case the second temperature sensor 19 can be used as detecting means for said observation parameter Ts.

Another possibility for obtaining the observation parameter is to use the error for the temperature regulation in the thermostat. The error is the difference between the set point temperature and the room temperature measured by the first temperature sensor 18. Usually this error is very large when the temperature of the heating fluid drops.

The learning means 22 output a signal Tpsb. This signal Tpsb shows the time of the day when periodic and central reduction of the inlet temperature of the valve 2 takes place.

As it is known in the art the control means 15 has furthermore two input, i.e. a set point SP for a room temperature and the actual room temperature Tr. The control means 15 controls the actuator 12 to open or close the valve 2 so that the actual room temperature Tr is as close as possible to the set point SP for the room temperature.

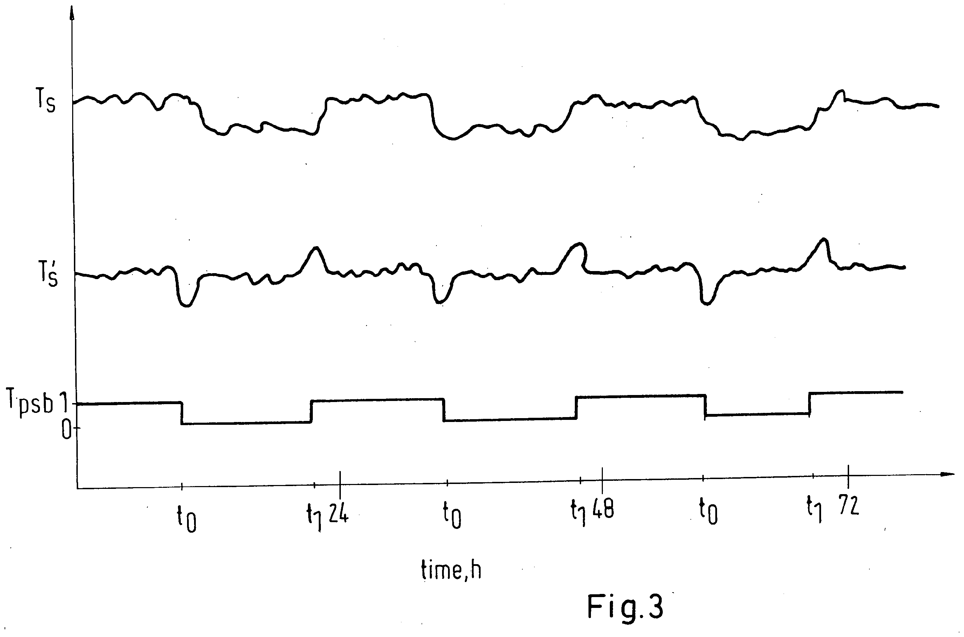

However, during a time when the signal Tpsb shows the central night setback this control of the control means 15 is overridden. When the central night setback starts the control means 15 locks the position of the valve element 8. Usually at the beginning of the central night setback the valve 2 is not fully open so that the valve 2 throttles the flow of heating fluid through the valve 2. Fig. 3 shows the observation parameter Ts as a function of time. This observation parameter Ts is differentiated to obtain the differentiated function T's of Ts. It can be seen that although the differentiated function T's shows some ondulations there is always a large negative peak at the start of the central night setback and a large positive peak at the end of the central night setback. This is clear since the temperature drop at the beginning of the central night setback is rather fast. The same is true for the end of the central night setback. The increase of temperature is fast as well.
In order to enhance the reliability of the detection of start and end of the central night setback the learning means 22 sums the differentiated function T's over a certain number of periods, for example over the last five days, each day having 24 hours.
This summation means that the function values of the differentiated function T's at the same time of each period are added. It is clear that in this way a rather large sum value is obtained at the beginning and at the end of the central night setback only whereas randomly distributed temperature drops and temperature increases do not occur at the same time during all periods. Therefore, when the differentiated and summed observation parameter exceeds a certain threshold value, there is a day-periodic change in the observation parameter, for example a reduction or an increase in the inlet temperature.

The differentiation, the summation and the comparison of the values with the threshold value can be performed by respective means. However, these formations can be realized by the control means 15 as well.

An additional criterion is that a central night setback is determined only when there is both a day-periodic reduction and increase. In this case, the learning means 22 detects the period in between as a central night setback in the heating system.

At the beginning of the detected central night setback, the learning means 22 locks a heat regulation of the valve means 1 at actual values and position. At the end of the detected central night setback the heat regulator of the valve means 1 is released again.

Additionally the control means 15 can comprise a calander means. This is of advantage when the central night setback is programmed for different sections of a week. Some people wish to have a later start of the central night setback at weekend and consequently a later end of the central night setback. In this case the learning function is realized not only over five days but over five weeks. In an early state central night setback for the week (Monday to Friday) can be detected whereas the central night set back at the weekend might be considered as error. However, after a couple of weeks the system will have learned that at Saturday and at Sunday the central night setback starts later.

The same procedure can be used for a cooling system as well. In this case during the central night setback the temperature of the cooling fluid is not lowered. Therefore, at the begin of the central night setback the temperature of the cooling fluid is increased and at the end of a central night setback the temperature of the cooling fluid drops.

## Claims

1. A controlled valve means (1) for a heat exchanger, in particular for a radiator, said valve means (1) comprising a valve element (8) controlling a flow of a heat carrying fluid through said heat exchanger and being actuated by an actuator (12), said actuator (12) being controlled by control means (15), whereby said control means (15) comprise learning means (22) comprising a clock and detecting means for an observation parameter, said observation parameter being influenced by a temperature of said heat carrying fluid, **characterised in that** said learning means (22) determine a time of a periodical central setback by detecting a systematic reduction of the inlet temperature of the heat carrying fluid, said learning means overriding the regulation in the valve means (1) during said determined time of periodical central setback.

2. The valve means according to claim 1, **characterized in that** said detecting means comprise a temperature sensor (19) arranged close to a housing part (11) through which said heat carrying fluid flows.

3. The valve means according to claim 1 or 2, **characterized in that** said detecting means registers an error for the temperature regulation in said valve means (1).

4. The valve means according to any of claims 1 to 3, **characterized in that** said learning means (22) differentiate said observation parameter (Ts) over the time forming a differentiated function (T's).

5. The valve means according to claim 4, **characterized in that** said differentiated function (T's) is summed by a predetermined number of periods to form a summation function and said summation function being compared with a threshold value.

6. The valve means according to any of claims 1 to 5, **characterized in that** said learning means (22) saves said learned time only if two consecutive changes of the observation parameter in opposite directions are detected.

7. The valve means according to any of claims 1 to 6, **characterized in that** said learning means (22) prevent said valve element (8) from fully opening said valve means (1).

8. The valve means according to any of claims 1 to 7, **characterized in that** said learning means (22) lock the position of the valve element (8) during central night setback.

9. The valve means according to any of claims 1 to 8, **characterized in that** said learning means (22) additionally comprise a calander means.

## Patentansprüche

1. Gesteuerte Ventileinrichtung (1) für einen Wärmetauscher, insbesondere für einen Heizkörper, wobei die Ventilmittel (1) ein Ventilelement (8) aufweisen, das einen Durchfluss eines Wärmeträgerfluids durch den Wärmetauscher steuert und durch ein Stellglied (12) betätigt wird, wobei das Stellglied (12) durch Steuermittel (15) gesteuert wird, wobei die Steuermittel (15) Lernmittel (22) aufweisen, die einen Zeitgeber und Detektionsmittel für einen Beobachtungsparameter aufweisen, wobei der Beobachtungsparameter von einer Temperatur des Wärmeträgerfluids beeinflusst wird, **dadurch gekennzeichnet, dass** die Lernmittel (22) einen Zeitpunkt einer periodischen zentralen Abschaltung durch Detektieren einer systematischen Verringerung der Einlasstemperatur des Wärmeträgerfluids bestimmen, wobei die Lernmittel die Regelung in den Ventilmitteln (1) während des vorbestimmten Zeitpunkts periodischer zentraler Abschaltung außer Kraft setzen.

2. Ventilmittel nach Anspruch 1, **dadurch gekennzeichnet, dass** die Detektionsmittel einen Temperatursensor (19) aufweisen, der nahe einem Gehäuseteil (11) angeordnet ist, durch das das Wärmeträgerfluid fließt.

3. Ventilmittel nach Anspruch 1 oder 2, **dadurch gekennzeichnet, dass** die Detektionsmittel einen Fehler für die Temperaturregelung in den Ventilmitteln (1) registrieren.

4. Ventilmittel nach einem der Ansprüche 1 bis 3, **dadurch gekennzeichnet, dass** die Lernmittel (22) den Beobachtungsparameter (Ts) im Verlauf der Zeit differenzieren und eine differenzierte Funktion (T's) bilden.

5. Ventilmittel nach Anspruch 4, **dadurch gekennzeichnet, dass** die differenzierte Funktion (T's) durch eine vorbestimmte Anzahl von Zeiträumen aufsummiert wird, um eine Summenfunktion zu bilden, und die Summenfunktion mit einem Schwellenwert verglichen wird.

6. Ventilmittel nach einem der Ansprüche 1 bis 5, **dadurch gekennzeichnet, dass** die Lernmittel (22) den gelernten Zeitpunkt nur dann speichern, wenn zwei aufeinanderfolgende Veränderungen der Beobachtungsparameter in entgegengesetzten Richtungen detektiert werden.

7. Ventilmittel nach einem der Ansprüche 1 bis 6, **dadurch gekennzeichnet, dass** die Lernmittel (22) verhindern, dass das Ventilelement (8) die Ventilmittel (1) vollständig öffnet.

8. Ventilmittel nach einem der Ansprüche 1 bis 7, **dadurch gekennzeichnet, dass** die Lernmittel (22) die Stellung des Ventilelements (8) während einer zentralen Nachtabschaltung sperren.

9. Ventilmittel nach einem der Ansprüche 1 bis 8, **dadurch gekennzeichnet, dass** die Lernmittel (22) zusätzlich Kalendermittel aufweisen.

## Revendications

1. Vanne commandée (1) pour un échangeur de chaleur, en particulier pour un radiateur, ladite vanne (1) comprenant un élément de vanne (8) qui commande un écoulement d'un fluide caloporteur à travers ledit échangeur de chaleur et qui est actionné par un actionneur (12), ledit actionneur (12) étant commandé par des moyens de commande (15), dans laquelle lesdits moyens de commande (15) comprennent des moyens d'apprentissage (22) comprenant une horloge et des moyens de détection pour un paramètre d'observation, ledit paramètre d'observation étant influencé par une température dudit fluide caloporteur, **caractérisée en ce que** lesdits moyens d'apprentissage (22) déterminent une période d'une régression centrale périodique en détectant une réduction systématique de la température d'entrée du fluide caloporteur, lesdits moyens d'apprentissage surmontant la régulation dans la vanne (1) pendant ladite période déterminée de régression centrale périodique.

2. Vanne selon la revendication 1, **caractérisée en ce que** lesdits moyens de détection comprennent un capteur de température (19) qui est agencé à proximité d'une partie de boîtier (11) à travers laquelle ledit fluide caloporteur s'écoule.

3. Vanne selon la revendication 1 or 2, **caractérisée en ce que** lesdits moyens de détection enregistrent une erreur de régulation de la température dans ladite vanne (1).

4. Vanne selon l'une quelconque des revendications 1 à 3, **caractérisée en ce que** lesdits moyens d'apprentissage (22) dérivent ledit paramètre d'observation (Ts) par rapport au temps afin de former une fonction dérivée (T's).

5. Vanne selon la revendication 4, **caractérisée en ce que** ladite fonction dérivée (T's) est additionnée d'un nombre prédéterminé de périodes afin de former une fonction de sommation, et ladite fonction de sommation est comparée à une valeur de seuil.

6. Vanne selon l'une quelconque des revendications 1 à 5, **caractérisée en ce que** lesdits moyens d'apprentissage (22) sauvent ladite période apprise uniquement si deux changements consécutifs du paramètre d'observation dans des directions opposées sont détectés.

7. Vanne selon l'une quelconque des revendications 1 à 6, **caractérisée en ce que** lesdits moyens d'apprentissage (22) empêchent ledit élément de vanne (8) d'ouvrir complètement ladite vanne (1).

8. Vanne selon l'une quelconque des revendications 1 à 7, **caractérisée en ce que** lesdits moyens d'apprentissage (22) verrouillent la position de l'élément de vanne (8) pendant une régression nocturne centrale.

9. Vanne selon l'une quelconque des revendications 1 à 8, **caractérisée en ce que** lesdits moyens d'apprentissage (22) comprennent en outre des moyens de calandrage.
